# EUROPÄISCHE PATENTSCHRIFT

(11) **EP 2 031 359 B1**
(45) Veröffentlichungstag und Bekanntmachung des Hinweises auf die Patenterteilung: **02.11.2016**
(21) Anmeldenummer: 08012407.6
(22) Anmeldetag: 09.07.2008
(51) Int. Cl.: G01F 23/296

(54) **Füllstandsmessvorrichtung zum Bestimmen und/oder Überwachen eines Füllstandes**
Fill level measuring device for determining and/or monitoring a fill level
Dispositif de mesure du niveau de remplissage destiné à la détermination et/ou la surveillance d'un niveau de remplissage

(30) Priorität: 30.08.2007 DE 102007041349
(43) Veröffentlichungstag der Anmeldung: 04.03.2009
(73) Patentinhaber: VEGA Grieshaber KG, 77709 Wolfach (DE)
(72) Erfinder: Gruhler, Holger, 78609 Tuningen (DE); Ohmayer, Gerd, 77716 Haslach (DE); Mellert, Martin, 77790 Steinach (DE); Jacob, Jörn, 77709 Kirnbach (DE)
(74) Vertreter: Westphal, Mussgnug & Partner Patentanwälte mbB

(56) Entgegenhaltungen:
- EP-A- 0 810 423
- EP-A- 1 580 539
- WO-A-01/88490
- DE-A1- 3 912 038
- DE-A1- 4 203 715
- DE-A1-102004 033 311
- DE-C1- 19 523 461

## Beschreibung

Die Erfindung bezieht sich auf eine Füllstandsmessvorrichtung zum Bestimmen und/oder Überwachen eines Füllstandes in einem Behälter mit den oberbegrifflichen Merkmalen gemäß Patentanspruch 1.

Eine solche Füllstandsvorrichtung ist aus EP-A 1 580 539 bekannt.

Füllstandsmessvorrichtungen zum Bestimmen und/oder Überwachen eines Füllstandes in einer Rohrleitung oder einem Behälter sind in verschiedenster Ausgestaltung bekannt. Insbesondere gibt es Füllstandsmessvorrichtungen mit einer in Schwingungen versetzbaren Membran, welche in einem starren Membranrand angeordnet ist. Der Membranrand kann dabei auch Bestandteil eines Gehäuses sein oder fest mit einem Gehäuse der Füllstandsmessvorrichtung verbunden sein. Üblicherweise weisen solche Füllstandsmessvorrichtungen eine Antriebseinrichtung auf, welche dazu dient, mit einer Antriebsstirnseite der Antriebseinrichtung die Membran in eine Schwingung zu versetzen, und/oder dazu dient, eine Schwingung der Membran aufzunehmen und in ein elektrisches Signal umzusetzen. Um dies zu ermöglichen, sehen derartige Füllstandsmessvorrichtungen üblicherweise eine Befestigungseinrichtung zum Befestigen der Antriebseinrichtung an dem Membranrand bzw. mit starrer Verbindung zu dem Membranrand relativ zu dem Membranrand am Gehäuse vor.

Allgemein bekannt ist eine Füllstandsmessvorrichtung, welche einen Zugbolzenantrieb mit Abstützung auf der Membran aufweist. Eine solche Anordnung kann jedoch zu einer unvorteilhaften Entlastung des Antriebsstapels aus piezoelektrischen Elementen, welche die Antriebseinrichtung ausbilden, sowohl über Temperatur aufgrund einer Wärmedehnung als auch über Druck aufgrund von Membranverformung bewirken.

Demgegenüber beschreibt DE 44 29 236 C2 eine Füllstandsmessvorrichtung, bei welcher von der Membran in rückseitiger Richtung ein Membranbolzen absteht, welcher durch die Antriebseinheit hindurchführt und die Antriebseinrichtung von einer von der Membran abgewandten Seite der Antriebseinrichtung in Richtung der Membran spannt. Dabei ist eine der Membran zugewandte Antriebsstirnseite der Antriebseinrichtung mit ihren außenseitigen Randabschnitten über starre zwischengelegte Elemente auf der Membran abgestützt. Auch bei dieser Anordnung kann sich eine unvorteilhafte Entlastung des Antriebsstapels sowohl über Temperatur aufgrund von Wärmedehnung als auch über Druck aufgrund einer Membranverformung ergeben.

DE 198 14 669 A1 beschreibt eine Füllstandsmessvorrichtung, bei welcher sich die Antriebseinrichtung mit ihrer von der Membran abgewandten Seite außenseitig an einem rohrförmigen Gehäuse abstützt. Durch externen Druck erhöht sich vorteilhaft die Vorspannung der Antriebseinheit. Nachteilhaft ergeben sich jedoch Einflüsse des Rohres bzw. eines stutzens aufgrund einer Temperaturausdehnung bei Wärmeänderungen.

DE 101 29 556 A1 beschreibt eine Füllstandsmessvorrichtung, bei welcher die Antriebseinheit von einem becherförmigen Körper umgeben ist, dessen offene Seite der Membran zugewandt ist und dessen der Membran zugewandter Umfang gemäß einer möglichen Ausführungsform an dem Membranrand befestigt ist. Mittels des Becherbodens dieser becherförmigen Struktur wird die Antriebseinheit direkt mit ihrer der Membran zugewandten Stirnseite gegen die Membran gespannt. Dadurch, dass sich der Antriebsstapel einer solche Antriebseinheit über eine rohrförmige Hülse am Rand der Membran abstützt, erhöht externer Druck vorteilhaft die Antriebsvorspannung. Optional kann eine derartige becheroder rohrförmige Hülse so ausgelegt werden, dass sie eine Temperaturausdehnung der Antriebseinrichtung bedingt kompensiert. Zwar bietet eine solche Anordnung Vorteile, jedoch ist eine Montage der Antriebseinrichtung in Rohrversionen oder derartigen becherförmigen Anordnungen schwierig. Außerdem muss eine Führung von Antriebsleitungen zum Ansteuern der Antriebsvorrichtung bzw. zum Ausgeben von dieser generierten Signalen nach hinten durch die Hülse bzw, durch den Becherboden hindurch erfolgen.

Allgemein bestehen bei den Füllstandsmessvorrichtungen des Standes der Technik verschiedene Nachteile. Bei Anliegen eines externen Druckes kommt es zu einer Entlastung bzw. Belastung des Antriebsstapels aus piezoelektrischen Elementen innerhalb der Antriebseinrichtung. Dies hat einen unmittelbaren Einfluss auf Frequenz, Amplitude und weitere Kenngrößen der Füllstandsmessvorrichtung und somit auf deren Funktionalität. Nachteilhaft findet auch eine Entlastung bzw. Belastung des Antriebsstapels bei Temperaturänderungen statt, was ebenfalls einen Einfluss auf die Frequenz, Amplitude etc. hat.

Die Aufgabe der Erfindung besteht darin, eine einfach ausgestaltete Füllstandsmessvorrichtung vorzuschlagen, welche eine Aufrechterhaltung der Antriebsvorspannung im Antriebsstapel aus piezoelektrischen Elementen über Änderungen von Temperatur und Druck ermöglicht. Insbesondere sollen Änderungen von Temperatur und Druck sowie weiteren äußeren Prozessbedingungen geringere Einflüsse auf die messrelevanten Parameter wie Amplitude, Frequenz, Vorspannung etc. haben.

Diese Aufgabe wird gelöst durch eine Füllstandsmessvorrichtung zum Bestimmen und/oder Überwachen eines Füllstandes mit den o-berbegrifflichen Merkmalen gemäß Patentanspruch 1. Vorteilhafte Ausgestaltungen sind Gegenstand abhängiger Ansprüche.

Bevorzugt wird demgemäß eine Füllstandsmessvorrichtung zum Bestimmen und/oder Überwachen eines Füllstandes mit einer in Schwingungen versetzbaren Membran, mit einem starren Membranrand, in welchem die Membran angeordnet ist, mit einer Antriebseinrichtung, die eine Antriebsstirnseite zum Versetzen der Membran in eine Schwingung und/oder zum Umsetzen einer Schwingung der Membran in ein elektrisches Signal aufweist, und mit einer Befestigungseinrichtung zum Befestigen der Antriebseinrichtung an dem Membranrand. Vorteilhaft wird diese Füllstandsmessvorrichtung dadurch, dass ein Abschnitt der Befestigungseinrichtung in einem Bereich zwischen der Antriebsstirnseite der Antriebseinrichtung und der Membran verlaufend angeordnet ist und dass zumindest ein Druckübertragungselement zwischen der Membran und der Antriebsstirnseite der Antriebseinrichtung so angeordnet ist, dass die Membran und die Antriebsstirnseite zur Schwingungsübertragung aneinander gekoppelt sind.

Im Gegensatz zu bekannten Konstruktionen von Füllstandsmessvorrichtungen mit Zugbolzenantrieben mit Abstützung auf der Membran bzw. an einem Zwischenboden, welcher die Antriebseinrichtung umgebend angeordnet ist, wird somit eine Konstruktion vorgeschlagen, bei welcher sich ein Antriebsstapel aus piezoelektrischen Elementen der Antriebsvorrichtung an einem zentrischen Bolzen abstützt, welcher jedoch nicht direkt mit der Membran verbunden ist, sondern welcher an der Befestigungseinrichtung in Form insbesondere eines massiven Zwischenbodens befestigt ist, wobei sich die Befestigungseinrichtung am Membranrand bzw. am insbesondere unteren Bereich eines am Membranrand befestigten Gehäuses oder Rohres abstützt. Die Befestigung der Antriebseinrichtung an dem Membranrand kann somit gegebenenfalls auch unter Zwischenschaltung weiterer starrer Elemente erfolgen, wie einem Gehäuse, an welchem die Membran bzw. der Membranrand und beabstandet davon die Befestigungseinrichtung fest angeordnet bzw. befestigt sind. In einem solchen Fall kann die Befestigungseinrichtung auch als mehrteilige Komponente angesehen werden. Entscheidend ist letztendlich, dass eine starre Verbindung durch die Befestigungseinrichtung bis zum Membranrand gewährleistet ist.

Im Gegensatz zu bekannten Zugbolzenantrieben mit Abstützung auf der Membran bzw. einem Zwischenboden ist somit eine Konstruktion zu finden, welche das Membranzentrum nicht auf Zug sondern auf Druck belastet. Vorteilhaft kann beim Montagevorgang eine leichte Optimierung bezüglich der thermischen Eigenschaften der verschiedenen zu montierenden Komponenten vorgenommen werden.

Bevorzugt ragt dabei zumindest ein Abschnitt des Druckübertragungselementes durch zumindest eine Durchgangsöffnung der Befestigungseinrichtung reibungsfrei hindurch. Die Befestigungseinrichtung ist bevorzugt in dem zwischen der Antriebsstirnseite der Antriebseinrichtung und der Membran verlaufenden Bereich von der Membran beabstandet verlaufend angeordnet, so dass die Membran ohne Dämpfung oder sonstigen Einfluss seitens der Befestigungseinrichtung schwingen kann. Das zumindest eine Druckübertragungselement. greift somit als Druckstück durch Durchgangsöffnungen der als Zwischenboden ausgebildeten Befestigungseinrichtung hindurch und koppelt somit die Antriebseinrichtung und die Membran zur Übertragung von Schwingungen. Dadurch können über das Druckübertragungselement sowohl Antriebskräfte von der Antriebseinrichtung zur Membran als auch von der Membran erfasste bzw. verstärkte Schwingungen zur Antriebseinrichtung übertragen werden. Vorteilhaft können die als Durchgangsöffnungen ausgebildeten Öffnungen der als Zwischenboden ausgestalteten Befestigungseinrichtung auch zur Ausrichtung der Befestigungseinrichtung bei einem Schweißvorgang zum insbesondere direkten Anschweißen an dem Membranrand verwendet werden. Solche Durchgangsöffnungen sind insbesondere mit Blick auf eine nicht zu weit vom Zentrum des Antriebsstapels entfernte Abstützung des Antriebsstapels auf den diesem zugewandten Oberflächen des Druckübertragungselements vorteilhaft.

Alternativ zu solchen Durchgangsöffnungen sind aber z.B. auch seitliche Aussparungen in der als Zwischenboden ausgestalteten Befestigungseinrichtung zum Führen von Stegen des Drückübertragungselements zur Antriebseinrichtung ausgestaltbar. Gemäß besonders einfach aufgebauter Ausführungsformen kann die Befestigungseinrichtung als ein Zugelement mit dem Membranrand verbunden und dabei an einer Seite des Druckübertragungselements reibungsfrei vorbeiführend ausgebildet sein. Dabei kann die Befestigungseinrichtung z.B. nur stegförmig oder umgekehrt U-förmig ausgestaltet sein, wobei dann neben dem Wandungsabschnitt der derart verbliebenen Befestigungseinrichtung zur Antriebseinrichtung hin zumindest ein Teil des Druckübertragungselements an der verbliebenen Befestigungseinrichtung vorbeiführt. Im Falle einer solchen Ausführungsform ist die Befestigungseinrichtung insbesondere nicht mehr scheibenförmig sondern nur noch als ein massiver Steg oder sogar nur noch als ein halber Steg ausgebildet.

An der Befestigungseinrichtung kann ein Zugelement befestigt sein, wobei das Zugelement durch die Antriebseinrichtung hindurchführt und das Zugelement die von der Membran abgewandte Seite der Antriebseinrichtung in Richtung der Membran spannt. Dabei führt das Zugelement bevorzugt von dem zwischen der Antriebsstirnseite der Antriebseinrichtung und der Membran verlaufenden Bereich der Befestigungseinrichtung ausgehend durch die Antriebseinrichtung hindurch und das Zugelement spannt die von der Membran abgewandte Seite der Antriebseinrichtung in Richtung der Membran gegen zumindest einen Teil einer Oberfläche des Druckübertragungselementes. Das Zugelement ist insbesondere als ein Zugbolzen ausführbar, der insbesondere reibungsfrei durch eine Öffnung der Antriebseinrichtung hindurchführt.

Das Druckübertragungselement ist bevorzugt auf einen von der Membran in Richtung der Antriebseinrichtung abstehenden Membranbolzen befestigt, insbesondere angeschraubt, so dass die Antriebsstirnseite auf einen zentralen Punkt oder Bereich der Membran spannbar ist. Besonders vorteilhaft ist eine zentrale Kopplung der Membran mit einer nicht-zentralen Kopplung der Antriebsstirnseite über das Druckübertragungselement, da bei Aufbringung einer Vorspannung die gewünschten Druckkräfte auf das Membranzentrum besonders genau einstellbar sind. Gleichzeitig nimmt der Stapel aus piezoelektrischen Elementen der Antriebseinrichtung über das als Druckübertragungselement ausgebildete Druckstück externe Drücke, welche über die Membran übertragen werden, großflächig über die Antriebsstirnseite verteilt auf. Wenn das Druckübertragungselement zur Membran hin an einem insbesondere kurzen Gewindebolzen befestigt ist, welcher aus der Membranfläche herausragt oder von dieser absteht, bietet eine solche Anordnung vorteilhaft sowohl einen Verdrehschutz als auch gleichzeitig ein Zentrierungsmittel.

Die Befestigungseinrichtung ist bevorzugt an dem Membranrand befestigt. Insbesondere ein Anschweißen und eine somit starre Verbindung ermöglicht eine exakte Spannkraftvoreinstellung der Antriebseinheit über die Befestigungseinrichtung, das Zugelement und die Spannmutter gegen die Membran durch eine einfache Schraubbewegung.

Die Befestigungseinrichtung ist insbesondere auch von der Antriebsstirnseite der Antriebseinrichtung beabstandet angeordnet, so dass eine Schwingungsübertragung von der Membran über das Druckübertragungselement zur Antriebsstirnseite ungehindert erfolgen kann.

Die Antriebseinrichtung ist bevorzugt in für sich bekannter Art und Weise durch einen Stapel piezoelektrischer Elemente ausgebildet.

Ermöglicht wird somit eine Auslegung der thermischen Materialeigenschaften auf einfache Art und Weise derart, dass die Ausdehnungen der entspannenden Komponenten einerseits, das heißt insbesondere der als Zwischenboden ausgebildeten Befestigungseinrichtung und des Zugelements, und der belasteten Komponenten andererseits, das heißt insbesondere des als Druckstück ausgebildeten Druckübertragungselements und der piezoelektrischen Elemente des Antriebsstapels, sich kompensieren können. Eine Kompensation ist des weiteren z. B. auch über im Stapel aus piezoelektrischen Elementen der Antriebseinheit zusätzlich eingelegte Ringe mit größerer Wärmeausdehnung der eingelegten Ringe als der des Zugelements möglich.

Eine solche Füllstandsmessvorrichtung bietet eine Vielzahl von Vorteilen. Feststellbar ist kein oder ein allenfalls reduziertes Nachlassen der Stapelvorspannung bei Druckänderungen. Ebenfalls ist kein oder ein nur reduziertes Nachlassen der Stapelvorspannung bei Änderungen der Temperatur bzw. sogar bei einem Temperaturschock feststellbar. Bei rohrförmigen Versionen der Antriebseinrichtung mit einem Antriebsstapel aus piezoelektrischen Elementen ist bei der Montage ein zentrisches Einschrauben iri die weiteren Komponenten möglich, was den Montageablauf in für sich bekannter Art und Weise einfach gestalten lässt. Durch die insbesondere rein zentrische Vorspannung der Membran entsteht eine höhere mechanische Güte, da die Membran in sich weniger verspannt wird. Durch eine Befestigung des als Befestigungseinrichtung dienenden Zwischenbodens im Membranrandbereich sind ein Außenrohr bzw. ein Stutzen im Fall einer Temperaturausdehnung ohne Einfluss auf die Antriebseinrichtung.

Ein Ausführungsbeispiel wird nachfolgend anhand der Zeichnung näher erläutert. Bei der Beschreibung verschiedener Ausführungsformen werden dabei im wesentlichen nur Unterschiede zu den sonstigen Ausführungsformen beschrieben. Es zeigen:
Fig. 1 eine schnittansicht durch eine Füllstandsmessvorrichtung zum Bestimmen und/oder Überwachen eines Füllstandes mit einer vorderseitigen Schwinggabel, welche von einer Membran abstehend ausgebildet ist, und Komponenten zum Anregen der Membran in einer Schwingung,
Fig. 2 eine perspektivische Ansicht auf einen Teil der vorderseitigen Komponenten gemäß Fig. 1 in zerlegter Darstellung,
Fig. 3 die Ansicht gemäß Fig. 2 mit zusätzlichen Komponenten,
Fig. 4 eine modifizierte Ausführungsform und
Fig. 5 eine noch weiter modifizierte Ausführungsform.

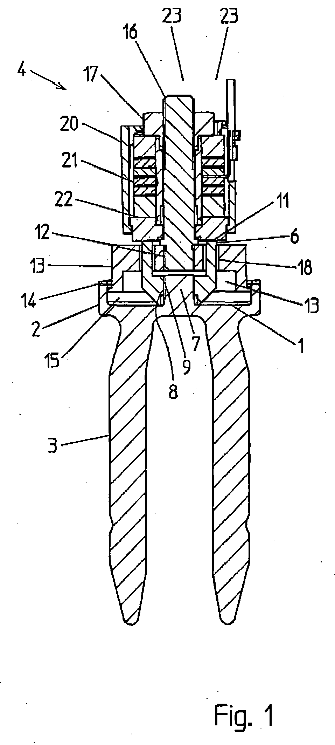

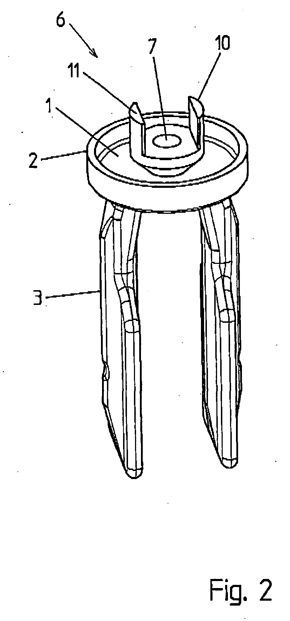

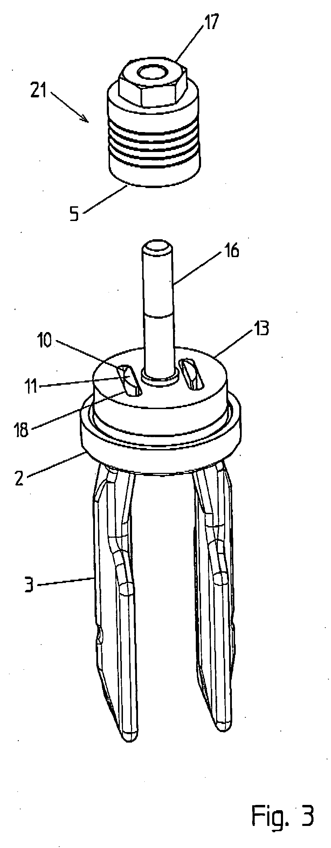

Die Fig. 1 bis 3 zeigen in verschiedenen Ansichten eine beispielhafte Füllstandsmessvorrichtung zum Bestimmen und/oder Überwachen eines Füllstandes in insbesondere einem Behälter oder zumindest einzelne Komponenten einer solchen Füllstandsmessvorrichtung.

In für sich bekannter Art und Weise besteht eine solche Füllstandsmessvorrichtung aus einer Membran 1, welche mit ihrem Membranrand 2 in einem Gehäuse festlegbar ist. Die Membran 1 ist dabei von dem starr ausgebildeten Membranrand 2 umgeben, wobei die Membran 1 jedoch schwingfähig bleibt. In vorderseitiger Richtung weist die Membran 1 einen Schwingkörper in Form beispielsweise einer Gabel 3 auf, welche als Antenne zum Absenden von Schwingungen der Membran 1 in die vorderseitige Umgebung dient und zugleich auch als Empfänger für Schwingungen aus der vorderseitigen Umgebung zur Übertragung auf die Membran 1 dient. In rückseitiger Richtung der Membran 1 ist eine Antriebseinrichtung 4 angeordnet, welche mit einer vorderseitigen Antriebsstirnseite 5 gegen die Membran 1 gespannt ist, um Schwingungen von der Antriebseinrichtung 4 auf die Membran 1 bzw. in umgekehrter Richtung zu übertragen.

Als wesentliche Komponente ist zwischen die Antriebseinrichtung 4 bzw. deren der Membran 1 zugewandte Antriebsstirnseite 5 einerseits und zwischen die Membran 1 anderseits ein Druckübertragungselement 6 gespannt. Das Druckübertragungselement 6 hält die Membran 1 und die Antriebsstirnseite 5 räumlich auf Distanz koppelt aber zugleich die Membran 1 und die Antriebsstirnseite 5 bezüglich Schwingungsübertragung miteinander.

Vorzugsweise ist das Druckübertragungselement 6 dabei so ausgestaltet, dass es möglichst zentral in vorderseitiger Richtung an der Membran 1 angreift und somit einen möglichst geringen zentralen Abschnitt der Membran 1 druckbeaufschlagt. Auf der gegenüberliegenden Seite, welche der Antriebsstirnseite 5 zugewandt ist, verteilt das Druckübertragungselement 6 hingegen den Druck auf eine möglichst große Fläche der Antriebsstirnseite 5. Insbesondere greift der Druck dabei von der zentralen Achse der Antriebseinrichtung 4 beabstandet an der Antriebsstirnseite 5 an.

Bevorzugt weist die Membran 1 in rückseitiger Richtung einen zentralen Membranbolzen 7 auf, welcher fest an der Membran 1 befestigt ist oder einteilig mit der Membran 1 ausgebildet ist. In diesem Fall kann das Druckübertragungselement 6 eine der Membran 1 zugewandte zentrale Bohrung aufweisen, welche den Membranbolzen 7 zur Zentrierung des Druckübertragungselements 6 übergreift. Besonders bevorzugt ist eine Ausgestaltung, bei welcher der Membranbolzen 7 ein Außengewinde 8 aufweist, in welches ein entsprechend entgegengesetzt gerichtetes Innengewinde 9 der Bohrung des Druckübertragungselements 6 eingreift. Dadurch ist das Druckübertragungselement 6 fest an der Membran 1 ankoppelbar, insbesondere an der Membran 1 anschraubbar.

In rückseitiger Richtung weist das Druckübertragungselement 6 vorzugsweise zwei oder mehr Schenkel 10 auf, welche eine der Antriebsstirnseite 5 zugewandte Schenkeloberfläche als Oberfläche 11 des Druckübertragungselements 6 aufweisen. Dadurch sind die Schenkel 10 des Druckübertragungselements 6 mit ihren Schenkeloberflächen gegen die Antriebsstirnseite 5 der Antriebseinrichtung 4 gespannt.

Als weiteres wesentliches Element weist die Füllstandsmessvorrichtung eine Befestigungseinrichtung 13 auf, welche zum Befestigen der Antriebseinrichtung 4 direkt oder indirekt an dem Membranrand 2 ausgebildet und angeordnet ist. Vorzugsweise.ist die Befestigungseinrichtung 13 mit ihrem Umfang direkt am Membranrand 2 über eine Schweißverbindung angeschweißt. Optional können jedoch auch weitere starre Komponenten, wie z.B. eine Gehäusewand, zwischen die eigentliche insbesondere scheibenförmige Befestigungseinrichtung 13 und den starren Membranrand 2 geschaltet sein, sofern die Befestigungseinrichtung 13 dann noch fest mit dem Membranrand 2 verbunden ist.

Zwischen dem eigentlichen Hauptkörper der Befestigungseinrichtung 13, welcher vorzugsweise als massige, massive und starre Scheibe ausgebildet ist, und der Rückseite der Membran 1 ist ein Freiraum 15 ausgebildet, so dass die Membran 1 in rückseitiger Richtung von der Befestigungseinrichtung 13 beabstandet ist und bei ihrer Schwingung nicht durch die Befestigungseinrichtung 13 beeinflusst wird.

In rückseitiger Richtung, das heißt von der Membran 1 abgewandt, dient die Befestigungseinrichtung 13 zur Fixierung einer rückseitigen Antriebsstirnseite der Antriebseinrichtung 4, das heißt zur Befestigung der von der Membran 1 abgewandten Seite der Antriebseinrichtung 4. Dazu führt gemäß einer besonders bevorzugten Ausführungsform ein Zugelement 16 als ein Befestigungselement in Form insbesondere eines Spannbolzens von der Befestigungseinrichtung 13 in rückseitiger Richtung zentral durch die Antriebseinrichtung 4 hindurch und rückseitig aus der Antriebseinrichtung 4 heraus. Mittels einer Spannmutter 17 ist die Antriebseinrichtung 4 auf einfache Art und Weise durch Aufschrauben der Spannmutter 17 auf ein rückseitiges Außengewinde des Zugelements 16 in Richtung der Membran 1 festgelegt und gespannt. Durch Drehen der Spannmutter 17 kann dabei die Vorspannkraft der Antriebseinrichtung 4 gegen das Druckübertragungselement 6 und darüber gegen die Membran 1 eingestellt werden. Das als insbesondere Spannbolzen ausgelegte Zugelement 16 kann mit seiner der Befestigungseinrichtung 13 zugewandten Seite mittels einer Gewindeanordnung 12 an der Befestigungseinrichtung 13 festgeschraubt sein.

Um trotz der zwischen der Membran 1 und der Antriebsstirnseite 5 angeordneten Befestigungseinrichtung 13 eine Druckübertragung bzw. Schwingungsübertragung über das Druckübertragungselement 6 ermöglichen zu können, weist die Befestigungseinrichtung 13 gemäß einer besonders bevorzugten Ausgestaltung Durchgangsöffnungen 18 auf, durch welche die Schenkel 10 des Druckübertragungselements 6 hindurchgeführt sind. Die Dimensionierung der Durchgangsöffnungen 18 relativ zu dem Außenumfang der Schenkel 10 ist dabei so gewählt, dass vorzugsweise keine Berührung zwischen diesen entsteht und somit ein reibungsfreier Durchgang der Schenkel 10 bzw. des Druckübertragungselements 6 durch die Befestigungseinrichtung 13 bzw. durch deren Durchgangsöffnungen 18 hindurch erfolgt. Dabei ragen die Schenkel 10 so weit durch die Durchgangsöffnungen 18 der Befestigungseinrichtung 13 hindurch, dass zwischen der rückseitigen Oberfläche der Befestigungseinrichtung 13 einerseits und der vorderseitigen Antriebsstirnseite 5 der Antriebseinrichtung 4 andererseits ein ausreichender Abstand verbleibt, dass die Antriebsstirnseite 5 nicht in Kontakt mit der Befestigungseinrichtung 13 gelangt.

Bei einer solchen Anordnung liegt somit zumindest bevorzugt ein Abschnitt der Befestigungseinrichtung 13 in einem direkt, geradlinig zwischen der Membran 1 und der Antriebsstirnseite 5 liegendem Bereich.

Die Antriebseinrichtung 4 selber besteht vorzugsweise in für sich bekannter Art und Weise aus einem Antriebsgehäuse 20, in welchem ein Antriebsstapel aus piezoelektrischen Elementen 21 um eine zentrale Öffnung herum angeordnet ist, wobei durch die zentrale Öffnung Zugelement 16 als Zug- bzw. Spannmittel hindurchführt. Bevorzugt wird die Antriebsstirnseite 5 nicht durch die Stirnseite eines vorderseitigen piezoelektrischen Elementes sondern durch ein eigenständiges Übergangs- oder Spannelement 22 ausgebildet. Der Antriebsstapel aus piezoelektrischen Elementen 21 und das vorderseitige Spannelement 22 sind dabei in dem Antriebsgehäuse 20 so gelagert, dass sie nicht aus dem Antriebsgehäuse 20 herausfallen können, jedoch in vorderseitiger Richtung vorzugsweise reibungsfrei bewegungsfähig innerhalb des Antriebsgehäuses 20 gelagert sind. Durch das Anlegen einer Spannung an Leiter 23, welche in üblicher Art und Weise an die Antriebseinrichtung 4 anschließbar sind, können die piezoelektrischen Elemente 21 angeregt werden, sich zu komprimieren und/oder zu expandieren, um eine Schwingung zu erzeugen, welche auf die Membran 1 übertragen wird. Im Fall von Schwingungen, welche von der Membran 1 empfangen und auf die piezoelektrischen Elemente 21 übertragen werden, erzeugen die piezoelektrischen Elemente 21 ihrerseits eine Spannung, welche als Signal über die Leiter 23 an eine externe Auswerteschaltung oder Steuereinrichtung ausgegeben wird.

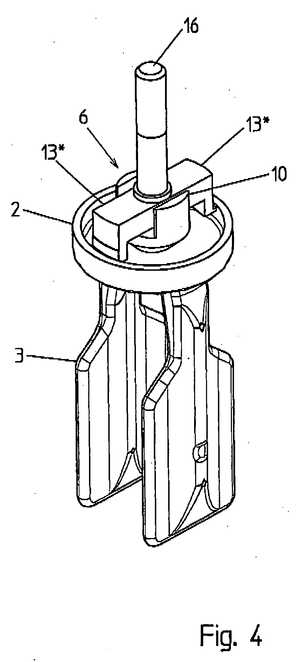

Fig. 4 zeigt eine modifizierte Ausführungsform. Anstelle einer scheibenförmigen Befestigungseinrichtung ist nur ein stegförmiger und insbesondere massiver Abschnitt einer alternativen Befestigungseinrichtung 13* mit einem im Wesentlichen umgekehrt U-förmig ausgestalteten Konturverlauf zwischen der Befestigungseinrichtung 13* in einem Bereich zwischen der Antriebsstirnseite 5 der Antriebseinrichtung 4 und der Membran 1 verlaufend angeordnet.

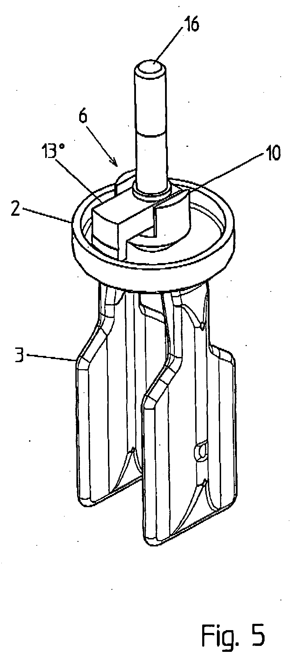

Fig. 5 zeigt eine noch weiter modifizierte Ausführungsform, Bei dieser ist der Steg gemäß Fig. 4 weiter verkürzt zu einem Befestigungseinrichtung 13° mit einem halben Steg, welcher das Zugelement mit dem Membranrand 2 verbindet und dabei das Druckübertragungselement 6 noch zu einer einzigen Seite des Druckübertragungselements 6 vorbeiführend umgreift.

## Patentansprüche

1. Füllstandsmessvorrichtung zum Bestimmen und/oder Überwachen eines Füllstandes mit
- einer in Schwingungen versetzbaren Membran (1), die von einem starr ausgebildeten Membranrand (2) umgeben ist und die in vorderseitiger Richtung einen Schwingungskörper (3) aufweist,
- einer in rückseitiger Richtung der Membran (1) angeordneten Antriebseinrichtung (4) in Form eines Antriebsstapels mit piezoelektrischen Elementen (5) zum Versetzen der Membran (1) in eine Schwingung und/oder zum Umsetzen einer Schwingung der Membran (1) in ein elektrisches Signal,
- einer in rückseitiger Richtung der Membran (1) angeordneten Befestigungseinrichtung (13) zum Befestigen der Antriebseinrichtung (4) an dem Membranrand (2),
- wobei die Antriebseinrichtung (4) eine der Membran (1) zugewandte Antriebsstirnseite (5) aufweist, **dadurch gekennzeichnet, dass**
- die Befestigungseinrichtung (13, 13*) (13) scheiben- oder stegförmig ausgebildet und mit dem Membranrand (2) fest verbunden ist,
- zumindest ein Druckübertragungselement (6) zwischen der Membran (1) und der Antriebsstirnseite (5) der Antriebseinrichtung (4) so angeordnet ist, dass die Membran (1) und die Antriebsstirnseite (5) zur Schwingungsübertragung aneinander gekoppelt sind;
- wobei das Druckübertragungselement (6) möglichst zentral in vorderseitiger Richtung an der Membran (1) angreift und rückseitig mindestens zwei durch die scheibenförmige Befestigungseinrichtung (13) hindurchragende oder die stegförmige Befestigungseinrichtung (13) umgreifende, jedoch die Befestigungseinrichtung (13) nicht berührende Schenkel (10) aufweist, welche gegen die Antriebsstirnseite (5) der Antriebseinrichtung (4) gespannt sind, und welche so lang ausgebildet sind, dass die Befestigungseinrichtung (13) nicht in Kontakt mit der Antriebseinrichtung (4) kommt, Mittel (16, 17) vorhanden sind, um die Vorspannkraft der Antriebseinrichtung (4) gegenüber dem Druckübertragungselement (6) und darüber gegen die Membran (1) einzustellen.

2. Füllstandsmessvorrichtung nach Anspruch 1,
**dadurch gekennzeichnet, dass**
die Schenkel (10)des Druckübertragungselementes (6) durch Durchgangsöffnungen (18) der Befestigungseinrichtung (13) hindurchragen.

3. Füllstandsmessvorrichtung nach Anspruch 1 oder 2,
**dadurch gekennzeichnet, dass**
die Befestigungseinrichtung (13) in dem zwischen der Antriebsstirnseite (5) der Antriebseinrichtung (4) und der Membran (1) verlaufenden Bereich von der Membran beabstandet verlaufend angeordnet ist.

4. Füllstandsmessvorrichtung nach einem vorstehenden Anspruch,
**dadurch gekennzeichnet, dass**
an der Befestigungseinrichtung (13) ein Zugelement (16) befestigt ist und wobei das Zugelement (16) durch die Antriebseinrichtung (4) hindurchführt und das Zugelement (16) die von der Membran (1) abgewandte Seite der Antriebseinrichtung (4) in Richtung der Membran (1) spannt.

5. Füllstandsmessvorrichtung nach Anspruch 4,
**dadurch gekennzeichnet, dass**
das Zugelement (16) von dem zwischen der Antriebsstirnseite (5) der Antriebseinrichtung (4) und der Membran (1) verlaufenden Bereich der Befestigungseinrichtung (13) ausgehend durch die Antriebseinrichtung (4) hindurchführt und das Zugelement (16) die von der Membran (1) abgewandte Seite der Antriebseinrichtung (4) in Richtung der Membran (1) gegen zumindest einen Teil einer Oberfläche (11) des Druckübertragungselementes (6) spannt.

6. Füllstandsmessvorrichtung nach Anspruch 4 oder 5, wobei das Zugelement (16) ein Zugbolzen ist, der durch eine Öffnung der Antriebseinrichtung (4) hindurchführt.

7. Füllstandsmessvorrichtung nach einem vorstehenden Anspruch,
**dadurch gekennzeichnet, dass**
das Druckübertragungselement (6) auf einen von der Membran (1) in Richtung der Antriebseinrichtung (4) abstehenden Membranbolzen (7) befestigt, insbesondere angeschraubt ist.

8. Füllstandsmessvorrichtung nach einem vorstehenden Anspruch,
**dadurch gekennzeichnet, dass**
die Befestigungseinrichtung (13) an dem Membranrand (2) angeschweißt ist.

## Claims

1. Fill level measuring device for determining and/or monitoring a fill level, having
- a membrane (1) which is able to be vibrated, said membrane being surrounded by a rigidly formed membrane edge (2) and having a vibration body (3) in the front side direction,
- a drive device (4) arranged in the rear side direction of the membrane (1) in the form of a drive stack having piezoelectric elements (5) to enable vibration of the membrane (1) and/or to convert a vibration of the membrane (1) into an electrical signal,
- a fastening device (13) arranged in the rear side direction of the membrane (1) for fastening the drive device (4) to the membrane edge (2),
- wherein the drive device (4) has a drive front side (5) facing the membrane (1), **characterised in that**
- the fastening device (13, 13*) is formed to be disc-shaped or web-shaped and is firmly connected to the membrane edge (2),
- at least one pressure transmission element (6) is arranged between the membrane (1) and the drive front side (5) of the drive device (4) in such a way that the membrane (1) and the drive front side (5) are coupled with each other for vibration transmission;
- wherein the pressure transmission element (6) engages with the membrane (1) as centrally as possible in the front side direction and, at the rear side, has at least two legs (10) which protrude through the disc-shaped fastening device (13) or surround the web-shaped fastening device (13), but do not touch the fastening device (13), said legs being tensioned against the drive front side (5) of the drive device (4) and being formed to be long enough that the fastening device (13) does not come into contact with the drive device (4) and means (16, 17) are present to adjust the preload force of the drive device (4) with respect to the pressure transmission element (6) and above this against the membrane (1).

2. Fill level measuring device according to claim 1,
**characterised in that**
the legs (10) of the pressure transmission element (6) protrude through passage openings (18) of the fastening device (13).

3. Fill level measuring device according to claim 1 or 2,
**characterised in that**
the fastening device (13) is arranged to run at a distance from the membrane in the region running between the drive front side (5) of the drive device (4) and the membrane (1).

4. Fill level measuring device according to one of the preceding claims,
**characterised in that**
a tension element (16) is fastened to the fastening device (13) and wherein the tension element (16) passes through the drive device (4) and the tension element (16) tensions the side of the drive device (4) facing away from the membrane (1) in the direction of the membrane (1).

5. Fill level measuring device according to claim 4,
**characterised in that**
the tension element (16) passes from the region of the fastening device (13) running between the drive front side (5) of the drive device (4) and the membrane (1) through the drive device (4), and the tension element (16) tensions the side of the drive device (4) facing away from the membrane (1) in the direction of the membrane (1) against at least one part of a surface (11) of the pressure transmission element (6).

6. Fill level measuring device according to claim 4 or 5, wherein the tension element (16) is a tension bolt which passes through an opening of the drive device (4).

7. Fill level measuring device according to one of the preceding claims,
**characterised in that**
the pressure transmission element (6) is fastened, in particular is screwed, to a membrane bolt (7) protruding from the membrane (1) in the direction of the drive device (4).

8. Fill level measuring device according to one of the preceding claims,
**characterised in that**
the fastening device (13) is welded to the membrane edge (2).

## Revendications

1. Dispositif de mesure de niveau destiné à permettre de déterminer et/ou de surveiller un niveau comprenant
une membrane (1) pouvant être mise en vibration qui est entourée d'un bord de membrane (2) rigide et qui est comporte un corps vibrant (3) du côté de sa face avant,
une dispositif d'entraînement (4) installé du côté de la face arrière de la membrane (1) sous la forme d'un empilement d'entraînement avec des éléments piézoélectriques (5) destinés à mettre la membrane (1) en vibration et/ou à convertir les vibrations de la membrane (1) en un signal électrique,
un dispositif de fixation (13) installé du côté de la face arrière de la membrane (1) pour permettre de fixer le dispositif d'entraînement (4) au bord (2) de la membrane,
le dispositif d'entraînement (4) comportant une face frontale d'entraînement (5) tournée vers la membrane (1),
**caractérisé en ce que**
le dispositif de fixation (13, 13*) est réalisé en forme de disque ou de barre et est relié solidairement au bord de la membrane (2),
au moins un élément de transmission de pression (6) est installé entre la membrane (1) et la face frontale d'entraînement (5) du dispositif d'entraînement (4) de sorte que la membrane (1) et la face frontale d'entraînement (5) sont accouplées pour permettre la transmission des vibrations,
l'élément de transmission de la pression (6) vient en prise dans une position aussi centrale que possible sur la membrane (1) du côté de la face avant de celle-ci et comporte, du côté de sa face arrière, au moins deux branches (10) passant au travers du dispositif de fixation (13) en forme de disque ou entourant le dispositif de fixation (13) en forme de barre, ce sans venir en contact avec ce dispositif de fixation (13), qui sont précontraintes contre la face frontale d'entraînement (5) du dispositif d'entraînement (4) et sont réalisées avec une longueur telle que le dispositif de fixation (13) ne vienne pas en contact avec le dispositif d'entraînement (4),
des moyens (16, 17) étant prévus pour permettre de régler la force de précontrainte du dispositif d'entraînement (4) par rapport à l'élément de transmission de la pression (6) et par suite de la membrane (1).

2. Dispositif de mesure de niveau conforme à la revendication 1,
**caractérisé en ce que**
les branches (10) de l'élément de transfert de la pression (6) passent au travers d'ouvertures de passage (18) du dispositif de fixation (13).

3. Dispositif de mesure de niveau conforme à la revendication 1 ou 2,
**caractérisé en ce que**
le dispositif de fixation (13) est installé dans la zone s'étendant entre la face frontale d'entraînement (5) du dispositif d'entraînement (4) et la membrane (1) à distance de la membrane.

4. Dispositif de mesure de niveau conforme à l'une des revendications précédentes,
**caractérisé en ce que**
sur le dispositif de fixation (13) est fixé un élément de traction (16) et cet élément (16) passe au travers du dispositif d'entraînement (4) et tend la face du dispositif d'entraînement (4) tournée à l'opposé de la membrane (1) en direction de la membrane (1).

5. Dispositif de mesure de niveau conforme à la revendication 4,
**caractérisé en ce que**
l'élément de traction (16) passe au travers du dispositif d'entraînement (4) en partant de la zone du dispositif de fixation (13) s'étendant entre la face frontale d'entraînement (5) du dispositif d'entraînement (4) et la membrane (1), et tend la face tournée à l'opposé de la membrane (1) du dispositif d'entraînement (4) en direction de la membrane (1) contre au moins une partie d'une surface (11) de l'élément de transmission de pression (6).

6. Dispositif de mesure de niveau conforme à la revendication 4 ou 6, dans lequel
l'élément de traction (16) est un boulon de traction qui passe au travers d'une ouverture du dispositif d'entraînement (4).

7. Dispositif de mesure de niveau conforme à l'une revendications précédentes,
**caractérisé en ce que**
l'élément de transmission de pression (6) est fixé, et en particulier vissé, sur un boulon de membrane (7) s'écartant de la membrane (1) en direction du dispositif d'entraînement (4).

8. Dispositif de mesure de niveau conforme à l'une des revendications précédentes,
**caractérisé en ce que**
le dispositif de fixation (13) est soudé au bord (2) de la membrane.
